# EUROPEAN PATENT SPECIFICATION

(11) **EP 1 584 459 B1**
(45) Date of publication and mention of the grant of the patent: **26.07.2017**
(21) Application number: 05076238.4
(22) Date of filing: 04.04.2005
(51) Int. Cl.: B32B 1/08, B32B 7/02, B29C 47/06

(54) **Multilayer tube of thermoplastic and method of its obtaining**
Mehrschichtiges Rohr aus thermoplastischem Kunststoff und Verfahren zur Herstellung
Tube multicouche en thermoplastique et procédé pour sa fabrication

(30) Priority: 08.04.2004 NL 1025903
(43) Date of publication of application: 12.10.2005
(73) Proprietor: Wavin B.V., 8011 CW Zwolle (NL)
(72) Inventor: Overeijnder, Hans, 7771 EH Hardenberg (NL)
(74) Representative: Hoffmann Eitle

(56) References cited:
- EP-A- 0 032 629
- US-A- 4 265 693
- US-A- 4 484 883
- US-A- 4 548 570
- US-A1- 2003 077 347
- US-B1- 6 409 494
- PATENT ABSTRACTS OF JAPAN vol. 0103, no. 26 (M-532), 6 November 1986 (1986-11-06) & JP 61 134220 A (TOYO SEIKAN KAISHA LTD), 21 June 1986 (1986-06-21)

## Description

The invention relates firstly to a multilayer tube of thermoplastic obtainable by extrusion, the tube at least comprising a core layer which is surrounded by an inner layer and an outer layer.

Multilayer tubes of this type are generally known and are used for various purposes, such as water drainage systems, sewage systems and the like, depending on their composition.

With a view to achieving desired properties, it is in some cases desirable to use different plastics for the various layers, and it may occur that plastics with different melt flow indices are used.

The melt flow index value (MFI value) is a measure of the rate at which a plastic flows through an opening of specific length and diameter at a defined temperature and pressure. The higher the MFI value, the lower the viscosity under the conditions at which the value is determined.

It has been found that, in particular if the MFI value of the core layer is considerably higher than the MFI value of the inner layer and the outer layer, many problems arise during extrusion. In particular the flow through the extrusion die is problematic; the core material with the lower viscosity readily flows through the extrusion die, whereas the material for the inner and outer layers does not. The latter layers are not carried along by the core as well as desired, resulting in an irregular thickness of the inner and/or outer layer.

Multilayer tubes, for example a three-layer tube, in which the core layer is formed from a plastic with an MFI value which is considerably higher than the MFI value of the plastic of the inner and outer layer and in which the inner and outer layer have a very uniform thickness, with the thickness of the core layer also being uniform, are not described in the literature or commercially available.

Further, US 6,409,494 B1 discloses a device for extruding multilayer plastic films, boards or tubes with a feed block, whose inputs are fed with polymer melts and which conveys the polymer melts from its inputs via individual layer channels to a slotted passage, forming its output. Temperature control units are arranged spaced apart in the feed block along a width of the individual layer channels for the purpose of heating or cooling.

US 4,265,693 discloses a method of molding a tubular laminate comprising joining flows of a plurality of thermoplasticized resins together to prepare a laminated composite flow having two side edges, and then passing the composite flow having two side edges through an annular extrusion die to abut both side edges of the respective layers to each other in the die, thereby forming an integrated tubular flow. US 4,548,570 discloses a three layered pipe having an outer layer of polyethylene terephthalate, an intermediate barrier film of ethylene vinyl alcohol, and an inner layer of polyethylene terephthalate. It is an object of the present invention to provide a product of the type indicated which is characterized in that the core layer comprises a plastic material with a melt flow index value (MFI value) which is higher than the MFI value of the plastic of both the inner layer and the outer layer, if the MFI value is measured under the same conditions. A tube of this type has an inner layer and an outer layer as well as a core layer which are of very uniform thickness despite the fact that the MFI value of the core layer is considerably higher than the MFI value of the inner layer and/or the outer layer.

By way of example, the method described in DIN 53735 at a temperature of 230 DEG C and a weight of 2.16 kg is used to measure the MFI value.

A multilayer tube according to the present invention is defined by the combination of features of claim 1. A method for producing a multilayer tube according to the present invention is defined by the combination of features of claim 8.

In particular, the plastic of the core layer has an MFI value which is 1.5 to 20x the lowest MFI value of the plastic of the other layers.

It is expedient for a plastic whereof the MFI value is 1.5 - 18x the lowest MFI value of the other layers to be used for the core layer; 1.5 - 8x is more expedient.

The core layer advantageously comprises a plastic with an MFI value which is 1.5 - 6x the lowest MFI value of the plastic of the other layers. The MFI value of the plastic of the core layer may, for example, preferably be 1.5 - 4x the lowest MFI value of the plastics of the other layers, more preferably 2 - 4x the lowest MFI value of the plastics of the other layers.

In the context of the invention, reference is made to EP-A-0205237. This publication describes the formation of a tubular object by extrusion in which a material with a low MFI value is used as core layer and at least one outer layer is formed from a plastic with an MFI value which is considerably higher than the MFI value of the plastic of the first layer. The liquid material of lower viscosity which is applied to the outer side of the layer with a high viscosity serves as a type of lubricant in the extrusion die, with the result that the viscous core can still flow.

As is apparent from what has been described above, "kinematic reversal" of the process described in the above publication is not possible, since the extrusion of, for example, a three-layer tube using a plastic for the core layer with a high MFI value and a plastic for the inner and outer layer with a low MFI value leads to an extremely irregular thickness of both the inner and outer layers if measures of the type indicated below are not taken.

Wherever the present application refers to a multilayer tube, this should be understood as meaning that it may, of course, be used as a tube; however, a tube of this type can also be processed further, for example to produce multilayer objects of use, such as vessels and other types of containers, for example by blow-moulding. The field of application is however not restricted thereto. Flat materials can be obtained, for example, by cutting open a tube in the usual way after the tube has been formed.

In the multilayer tube according to the invention outlined above the plastic material may, of course, be of various types, provided that they can be processed by extrusion, if appropriate followed by other processing operations, such as blow-moulding. In particular, the plastic material for each of the layers may be selected from polypropylene, polyvinyl chloride, polyethylene, ABS, polyamide and polystyrene, while the core layer at least partially comprises a waste material respectively a recycled material which comprises one or more of the abovementioned plastics. By way of example, if packaging materials are formed from film-type material by deep drawing, a large amount of film material is left over, and it would be desirable to be able to process this material to form multilayer tubes by co-extrusion.

Leftover film material of this type, if it has a lower MFI than the plastic of the inner and outer layers on account of its composition and previous processing history, presents the problems outlined above during normal processing.

The present invention provides multilayer tubes which contain a core layer material of this type in which the inner and outer layers are of an extremely uniform thickness.

Wherever the above text has referred to the processing of waste material, this should be understood as meaning that as an alternative to waste material it is also possible to use recycled material which, if necessary, has been thoroughly cleaned in order to remove impurities and adhesive and pigment materials which do not form part of the plastic; such material is generally delivered as ready-to-use granules.

In particular, the multilayer tube as described above comprises three layers, with the core layer comprising polypropylene (PP) waste material with an MFI value of approximately 4.0, while the inner layer is PP copolymer with an MFI value of approximately 1.5 and the outer layer is PP copolymer with an MFI value of approximately 1.0.

In certain cases, the core layer, depending on the origin of the material for the core layer, may comprise at least an additional quantity of, for example, a barrier material, such as EVOH.

If desired, other materials can also be incorporated, such as fillers, plasticizers, agents which alter the impact strength, and the like.

In one attractive embodiment, the outer layer may also comprise at least a quantity of flame retardant and pigment with a view to improving property and appearance of the multilayer tube.

The outer layer as well as the inner layer may also comprise additional materials, such as those which have been listed above in connection with the core layer.

In one specific embodiment, the invention relates to a multilayer tube of the type described in which three layers are present: a core layer of recycled PP with an MFI value of approximately 12.8, an inner layer of PP copolymer with an MFI value of approximately 0.8, and an outer layer of PP homopolymer with an MFI value of likewise approximately 0.8. As indicated above, the MFI value is measured at 230°C and at a weight of 2.16 kg and is given in g/10 min. The invention also relates to a method for producing a multilayer tube from thermoplastic, the tube at least comprising a core layer, an inner layer and an outer layer, in which method a tube having an inner layer, a core layer and an outer layer is formed by conventional co-extrusion, in which the layers are joined to one another, followed by cooling of the multilayer tube formed in this way down to ambient conditions, which is characterized in that the plastic for the core layer is a plastic which, under the extrusion conditions for the inner layer and the outer layer, has a higher MFI value than the MFI value of the inner layer and the outer layer, and in that after the plastic of the core layer has been extruded, this plastic is cooled to a temperature at which the viscosity of the plastic corresponds to the viscosity of the plastic of the other layers before said plastic for the core layer is allowed to come into contact with one or more of the plastics of the other layers, which are processed at the temperature and pressure conditions customary for the extrusion of these plastics.

Surprisingly, it has proven possible to prevent the above-described problems of an uneven thickness of the inner and outer layers by, following the formation of the core layer of a multilayer tube by extrusion, the plastic of this core layer having an MFI which is considerably higher than the MFI of the inner and outer layers to be applied, cooling the plastic of the core layer to a temperature at which this plastic has a viscosity that is substantially equal to the viscosity of the other layers under the conditions of their conventional processing. In practice, this measure in many cases involves the plastic of the core layer being cooled to a temperature at which the plastic is just still liquid.

Therefore, the adjustment options in the extrusion process are used in particular to process the plastic with a high MFI value of the core layer together with the plastics of the inner and outer layers which have a considerably lower MFI value, it being ensured in particular that the viscosity of the plastic of the core layer matches the viscosity of the plastic of the other layers, and even that the viscosity of all the layers is substantially equal.

The practical determination of the processing conditions of the plastics can be effected on the basis of MFI measurements. The measurement temperature for the various plastics to be used is set in such a manner that the MFI values for the plastics are approximately equal. Identical MFI values are related to substantially identical viscosities. The abovementioned measurement temperatures for the various plastics form the basis for the processing temperature to be used. The processing temperature for a specific plastic can be taken to be equal to the measurement temperature. The processing temperature for a plastic may, however, also differ from the measurement temperature for this plastic as long as similar difference is also used for the other plastics, such that the MFI values and therefore the viscosities of all the plastics are substantially equal under the conditions of processing.

In particular, the method described above is characterized in that to form the core layer, the plastic of which is cooled to a temperature at which the plastic has a viscosity which corresponds to the viscosity of the plastic of the other layers, a device selected from:
- an extruder having a cooling zone in which the plastic is cooled,
- a first extruder in which the core layer is formed under conventional conditions and cooling takes place in a separate cooling extruder which follows the first extruder, is used.

The temperature of the plastic which is used for the core layer, before it comes into contact with the plastic of one or more of the other layers, is set to a temperature which is up to 10°C higher than the melt temperature of the plastic in question. In many cases which have been tested, these conditions are sufficient to match the viscosity of the core layer to the viscosity of the layers which surround it. However, in some instances it may be necessary to use a greater temperature difference, and this is permitted provided that the viscosity of the plastic of the core layer is then substantially matched to the viscosity of the other layers under their respective processing conditions.

During the extrusion of multilayer tubes from plastic with comparable MFI values, it is often possible, from an extruder drive point of view, to use an extrusion temperature which is considerably higher than the melt temperature of the plastic in question. Temperature differences of 25-30°C and more are not unusual. A higher temperature lowers the viscosity, with the result that the power required to drive the extruder is lower. However, the temperature is always kept at a lower level than the temperature at which decomposition of the plastic occurs. In the present invention, when processing a plastic for the core layer with an MFI value which is considerably higher (1.5 to 20x) than the lowest MFI value of the plastics of the other layers, a difference of at most 10°C between the melt temperature and the processing temperature is generally adhered to.

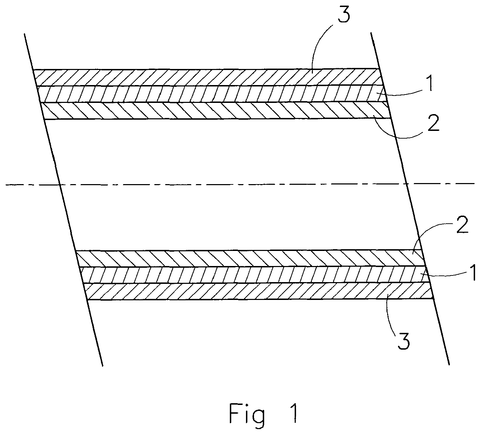

In the drawing, Figure 1 shows a three-layer tube according to the invention.

The figure shows a tube comprising a core layer (1), an outer layer (2) and an inner layer (3), respectively made from recycled PP; PP homopolymer and PP copolymer.

The invention will now be described with reference to an example, which should not be considered to impose any restrictions.

### EXAMPLE

The formation of a three-layer tube with a diameter of 50 mm is described below.

| Process settings | | | | |
|---|---|---|---|---|
| | Raw material | MFI value at 2.16 kg, 230°C (g/10 min) | Yield (kg/h) | Processing temperature (°C) |
| Core layer | Recycled PP | 12.8 | 57 | 183 |
| Inner layer | PP copolymer Moplen EP310D | 0.8 | 8 | 202 |
| Outer layer | PP homopolymer HY6100 | 0.8 | 17 | 198 |

The melt temperature of the PP used in the present test was approximately 175°C; the processing temperature was therefore set to be approximately 8°C higher than the melt temperature of the material.

The inner and outer layers were respectively processed at 202 and 198°C; the melt temperature of both PP copolymer and PP homopolymer is 170 to 175°C; therefore, the processing temperature of these materials is therefore selected to be significantly higher (max. approximately 32°C) than the melt temperature of the materials in question.

The properties of the tube obtained are given in the table below:

| Product properties | |
|---|---|
| Diameter | 49.7 mm |
| Wall thickness | 1.9/2.1 mm |
| Ring stiffness in accordance with EN ISO 9969 | 5.76 kN/m² |
| Impact test, 0.5 kg x 1 m x 23°C | 0% fracture |
| Impact test, 0.5 kg x 1 m x 0°C | 0% fracture |
| Impact test, 0.5 kg x 2 m x 0°C | 3% fracture |
| Melt index (2.16 kg, 230°C) | 6.8 g/10 min |
| Appearance | Good |

If it is attempted to produce the tube described above in the conventional way, it is impossible to achieve a good product. The flow of the inner and outer layers out of the extrusion die is extremely irregular, with the result that these layers often tear open. There is no point measuring properties of an unusable tube of this nature.

If the test described above is carried out for the production of a four-layer tube, of which the two "core layers" are made from a material with a higher MFI value than the material of the surrounding layers and in which the MFI values of the "core layers" differ from one another, the processing temperature of each of the core layers is set in such a manner that a comparable viscosity is obtained which, as indicated above, is once again substantially equal to the viscosity of the surrounding layers. The surrounding layers are processed at the temperature which is customary for the plastics in question. In general, as has been stated above, the processing conditions selected for each of the layers are selected in such a manner that the viscosities or MFI values of all the layers are substantially equal.

## Claims

1. Multilayer tube made from thermoplastic, which is obtainable by extrusion and at least comprises a core layer (1), which is surrounded by an inner layer (2) and an outer layer (3), **characterized in that** the core layer (1) comprises a plastics material with a melt flow index value (MFI value) which is higher than the MFI value of the plastic of both the inner layer (2) and the outer layer (3) if the MFI values are measured under the same conditions,
wherein the core layer (1) comprises a plastic with an MFI value which is 1.5 to 20x the lowest MFI value of the plastic of the other layers (2, 3).

2. Multilayer tube according to claim 1, **characterized in that** the core layer (1) comprises a plastic with an MFI value which is 1.5 to 4x the lowest MFI value of the plastic of the other layers (2, 3).

3. Multilayer tube according to claim 1 or 2, **characterized in that** the plastic material for each of the layers is selected from polypropylene, polyvinyl chloride, polyethylene, ABS and polystyrene, and **in that** the core layer at least partially comprises a waste material respectively recycled material comprising one or more of the abovementioned plastics.

4. Multilayer tube according to one or more of claims 1 - 3, **characterized in that** the tube comprises three layers, and the core layer (1) comprises polypropylene (PP) waste material with an MFI value of approx. 4.0; the inner layer (3) comprises PP copolymer with an MFI value of approx. 1.5, and the outer layer (2) comprises PP copolymer with an MFI value of approx. 1.0.

5. Multilayer tube according to one or more of claims 1 - 4, **characterized in that** the tube comprises three layers, and the core layer (1) comprises recycled polypropylene material with an MFI value of approximately 12.8; the copolymer (3) comprises PP copolymer with an MFI value of approximately 0.8 and the inner layer (2) comprises PP copolymer with an MFI value of approximately 0.8.

6. Multilayer tube according to claim 4 - 5, **characterized in that** the core layer (1) comprises at least an additional quantity of EVOH barrier material.

7. Multilayer tube according to claims 4 - 5, **characterized in that** the outer layer (2) comprises at least a quantity of flame retardant and pigment.

8. Method for producing a multilayer tube from thermoplastic, the tube at least comprising a core layer (1), an inner layer (2) and an outer layer (3), in which method a tube having an inner layer (2), a core layer (1) and an outer layer (3) is formed by conventional co-extrusion, in which the layers are joined to one another, followed by cooling of the multilayer tube formed in this way down to ambient conditions, **characterized in that** the plastic for the core layer (1) is a plastic which, under the extrusion conditions for the inner layer (2) and the outer layer (3), has a higher MFI value than the MFI value of the inner layer (2) and the outer layer (3), and **in that** after the plastic of the core layer (1) has been extruded, this plastic is cooled to a temperature at which the viscosity of the plastic corresponds to the viscosity of the plastic of the other layers before this plastic is allowed to come into contact with one or more of the plastics of the other layers (2, 3), which are processed at the temperature and pressure conditions customary for the extrusion of these plastics.

9. Method according to claim 8, **characterized in that** to form the core layer (1), the plastic of which is cooled to a temperature at which the plastic has a viscosity which corresponds to the viscosity of the plastic of the other layers, a device selected from:
an extruder having a cooling zone in which the plastic is cooled,
a first extruder in which the core layer (1) is formed under conventional conditions and cooling takes place in a separate cooling extruder which follows the first extruder, is used.

10. Method according to claims 8 or 9, **characterized in that** the temperature of the plastic which is used for the core layer (1), before it comes into contact with the plastic of one or more of the other layers (2, 3), is set to a temperature which is up to 10 DEG C higher than the melt temperature of the plastic concerned.

## Patentansprüche

1. Mehrschichtiges Rohr aus thermoplastischem Kunststoff, das durch Extrusion erhältlich ist und zumindest eine Kernschicht (1) umfasst, die von einer inneren Schicht (2) und einer äußeren Schicht (3) umgeben ist, **dadurch gekennzeichnet, dass** die Kernschicht (1) ein Kunststoffmaterial mit einem Schmelzflußindex-Wert (MFI-Wert) umfasst, der höher ist, als der MFI-Wert des Kunststoffs von sowohl der inneren Schicht (2) als auch der äußeren Schicht (3), wenn die MFI-Werte unter den gleichen Bedingungen gemessen werden,
wobei die Kernschicht (1) einen Kunststoff mit einem MFI-Wert umfasst, der 1,5 bis 20 x des niedrigsten MFI-Wertes des Kunststoffs der anderen Schichten (2, 3) beträgt.

2. Mehrschichtiges Rohr nach Anspruch 1, **dadurch gekennzeichnet, dass** die Kernschicht (1) einen Kunststoff mit einem MFI-Wert umfasst, der 1,5 bis 4 x des niedrigsten MFI-Wertes des Kunststoffs der anderen Schichten (2, 3) beträgt.

3. Mehrschichtiges Rohr nach Anspruch 1 oder 2, **dadurch gekennzeichnet, dass** das Kunststoffmaterial für jede der Schichten aus Polypropylen, Polyvinylchlorid, Polyethylen, ABS und Polystyrol ausgewählt ist und dadurch, dass die Kernschicht zumindest teilweise ein Abfallmaterial bzw. ein Recyclingmaterial umfasst, das ein oder mehrere von den zuvor erwähnten Kunststoffen umfasst.

4. Mehrschichtiges Rohr nach einem oder mehreren der Ansprüche 1 bis 3, **dadurch gekennzeichnet, dass** das Rohr drei Schichten umfasst und die Kernschicht (1) ein Polypropylen (PP)-Abfallmaterial mit einem MFI-Wert von etwa 4,0 umfasst; die innere Schicht (3) ein PP-Copolymer mit einem MFI-Wert von etwa 1,5 umfasst und die äußere Schicht (2) ein PP-Copolymer mit einem MFI-Wert von etwa 1,0 umfasst.

5. Mehrschichtiges Rohr nach einem oder mehreren der Ansprüche 1 bis 4, **dadurch gekennzeichnet, dass** das Rohr drei Schichten umfasst und die Kernschicht (1) ein recyceltes Polypropylenmaterial mit einem MFI-Wert von etwa 12,8 umfasst; das Copolymer (3) ein PP-Copolymer mit einem MFI-Wert von etwa 0,8 umfasst und die innere Schicht (2) ein PP-Copolymer mit einem MFI-Wert von etwa 0,8 umfasst.

6. Mehrschichtiges Rohr nach Anspruch 4 bis 5, **dadurch gekennzeichnet, dass** die Kernschicht (1) zumindest eine zusätzliche Menge an EVOH-Barrierematerial umfasst.

7. Mehrschichtiges Rohr nach Anspruch 4 bis 5, **dadurch gekennzeichnet, dass** die äußere Schicht (2) zumindest eine Menge an Flammschutzmittel und Pigment umfasst.

8. Verfahren zum Herstellen eines mehrschichtigen Rohrs aus thermoplastischem Kunststoff, wobei das Rohr zumindest eine Kernschicht (1), eine innere Schicht (2) und eine äußere Schicht (3) umfasst, wobei in dem Verfahren ein Rohr mit einer inneren Schicht (2), einer Kernschicht (1) und einer äußeren Schicht (3) durch konventionelle Co-Extrusion gebildet wird, bei der die Schichten miteinander verbunden werden, gefolgt von einem Abkühlen des auf diese Weise gebildeten mehrschichtigen Rohrs auf Umgebungsbedingungen,
**dadurch gekennzeichnet, dass** der Kunststoff für die Kernschicht (1) ein Kunststoff ist, der, unter den Extrusionsbedingungen für die innere Schicht (2) und die äußere Schicht (3), einen höheren MFI-Wert aufweist, als der MFI-Wert für die innere Schicht (2) und die äußere Schicht (3) und dadurch, dass nachdem der Kunststoff der Kernschicht (1) extrudiert worden ist, dieser Kunststoff auf eine Temperatur abgekühlt wird, bei der die Viskosität des Kunststoffs der Viskosität des Kunststoffs der anderen Schichten entspricht, bevor diesem Kunststoff erlaubt wird, mit einem oder mehreren der Kunststoffe der anderen Schichten (2, 3) in Kontakt zu kommen, die unter Temperatur-und Druckbedingungen, die für die Extrusion von diesen Kunststoffen üblich sind, verarbeitet werden.

9. Verfahren nach Anspruch 8, **dadurch gekennzeichnet, dass**, um die Kernschicht (1) zu bilden, der Kunststoff dieser auf eine Temperatur abgekühlt wird, bei der der Kunststoff eine Viskosität aufweist, die der Viskosität des Kunststoffs der anderen Schichten entspricht, eine Vorrichtung verwendet wird, die ausgewählt ist aus:
einem Extruder mit einer Kühlzone, in der der Kunststoff abgekühlt wird,
einem ersten Extruder, in dem die Kernschicht (1) unter konventionellen Bedingungen gebildet wird, und wobei das Abkühlen in einem separaten Kühlextruder, der dem ersten Extruder folgt, stattfindet.

10. Verfahren nach Anspruch 8 oder 9, **dadurch gekennzeichnet, dass** die Temperatur des Kunststoffs, der für die Kernschicht (1) verwendet wird, bevor er mit dem Kunststoff einer oder mehrerer der anderen Schichten (2, 3) in Kontakt kommt, auf eine Temperatur eingestellt wird, die bis zu 10 Grad Celsius höher ist, als die Schmelztemperatur des betreffenden Kunststoffs.

## Revendications

1. Tube multicouche réalisé en thermoplastique, qui peut être obtenu par extrusion et comprend au moins une couche centrale (1), qui est entourée d'une couche intérieure (2) et d'une couche extérieure (3), **caractérisé en ce que** la couche centrale (1) comprend un matériau plastique avec une valeur d'indice de fluidité à chaud (valeur MFI) qui est supérieure à la valeur MFI à la fois du plastique de la couche intérieure (2) et de la couche extérieure (3) si les valeurs MFI sont mesurées dans les mêmes conditions,
dans lequel la couche centrale (1) comprend un plastique avec une valeur MFI qui est 1,5 à 20 fois la valeur MFI la plus faible du plastique des autres couches (2, 3).

2. Tube multicouche selon la revendication 1, **caractérisé en ce que** la couche centrale (1) comprend un plastique avec une valeur MFI qui est 1,5 à 4 fois la valeur MFI la plus faible du plastique des autres couches (2, 3).

3. Tube multicouche selon la revendication 1 ou 2, **caractérisé en ce que** le matériau plastique pour chacune des couches est sélectionné parmi le polypropylène, le polychlorure de vinyle, le polyéthylène, l'ABS et le polystyrène, et **en ce que** la couche centrale comprend au moins partiellement un matériau de rebut, respectivement un matériau recyclé, comprenant un ou plusieurs des plastiques susmentionnés.

4. Tube multicouche selon une ou plusieurs des revendications 1 - 3, **caractérisé en ce que** le tube comprend trois couches, et la couche centrale (1) comprend un matériau de rebut en polypropylène (PP) avec une valeur MFI d'environ 4,0; la couche intérieure (3) comprend un copolymère PP avec une valeur MFI d'environ 1,5, et la couche extérieure (2) comprend un copolymère PP avec une valeur MFI d'environ 1,0.

5. Tube multicouche selon une ou plusieurs des revendications 1 - 4, **caractérisé en ce que** le tube comprend trois couches, et la couche centrale (1) comprend un matériau de polypropylène recyclé avec une valeur MFI d'environ 12,8 ; le copolymère (3) comprend un copolymère PP avec une valeur MFI d'environ 0,8 et la couche intérieure (2) comprend un copolymère PP avec une valeur MFI d'environ 0,8.

6. Tube multicouche selon les revendications 4 et 5, **caractérisé en ce que** la couche centrale (1) comprend au moins une quantité supplémentaire de matériau barrière EVOH.

7. Tube multicouche selon les revendications 4 et 5, **caractérisé en ce que** la couche extérieure (2) comprend au moins une quantité de retardateur de flamme et de pigment.

8. Procédé de production d'un tube multicouche en thermoplastique, le tube comprenant au moins une couche centrale (1), une couche intérieure (2) et une couche extérieure (3), procédé dans lequel un tube ayant une couche intérieure (2), une couche centrale (1) et une couche extérieure (3) est formé par co-extrusion conventionnelle, dans laquelle les couches sont reliées les unes aux autres, suivie du refroidissement du tube multicouche ainsi formé jusqu'aux conditions ambiantes,
**caractérisé en ce que** le plastique pour la couche centrale (1) est un plastique qui, dans les conditions d'extrusion pour la couche intérieure (2) et la couche extérieure (3), a une plus grande valeur MFI que la valeur MFI de la couche intérieure (2) et de la couche extérieure (3), et **en ce qu'**après que le plastique de la couche centrale (1) a été extrudé, ce plastique est refroidi à une température à laquelle la viscosité du plastique correspond à la viscosité du plastique des autres couches avant que ce plastique soit autorisé à entrer en contact avec un ou plusieurs des plastiques des autres couches (2, 3), qui sont traités à des conditions de température et de pression habituelles pour l'extrusion de ces plastiques.

9. Procédé selon la revendication 8, **caractérisé en ce que** pour former la couche centrale (1), dont le plastique est refroidi à une température à laquelle le plastique a une viscosité qui correspond à la viscosité du plastique des autres couches, un dispositif sélectionné parmi :
une extrudeuse ayant une zone de refroidissement dans laquelle le plastique est refroidi,
une première extrudeuse dans laquelle la couche centrale (1) est formée dans des conditions conventionnelles et un refroidissement a lieu dans une extrudeuse de refroidissement séparée en aval de la première extrudeuse, est utilisé.

10. Procédé selon les revendications 8 ou 9, **caractérisé en ce que** la température du plastique qui est utilisé pour la couche centrale (1), avant qu'il entre en contact avec le plastique d'une ou plusieurs des autres couches (2, 3), est réglée à une température qui est jusqu'à 10 °C supérieure à la température de fusion du plastique concerné.
